# EUROPEAN PATENT APPLICATION

(11) **EP 2 532 990 A1**
(43) Date of publication of application: **12.12.2012**
(21) Application number: 10845195.6
(22) Date of filing: 04.02.2010
(51) Int. Cl.: F25B 1/00

(54) **HEAT PUMP AND METHOD FOR OPERATING HEAT PUMP**

(71) Applicant: Mayekawa Mfg. Co., Ltd., Koto-ku Tokyo 135-8482 (JP)
(72) Inventor: HATTORI, Toshiro, Tokyo 135-8482 (JP); ISHIZUKI, Yusuke, Tokyo 135-8482 (JP)
(74) Representative: Regimbeau
(86) International application number: PCT/JP2010/051553
(87) International publication number: WO 2011/096059

(57) **Abstract**

The object is to provide a heat pump, in which thermal efficiency is increased by employing a configuration including no oil cooler, and which can be used even at a high temperature of heat medium, discharged from a screw compressor, at equal to or higher than 150°C, and a method of operating such a pump. The heat pump includes a hydraulic compressor that compresses a heat medium, an oil separation and recovery device that separates oil from the heat medium discharged from the compressor and returns the separated oil to the compressor, a condenser that liquefies the heat medium compressed in the compressor for heat dissipation, a decompression device that decompresses the heat medium liquefied in the condenser, and an evaporator that causes the heat medium decompressed in the decompression device to absorb heat and be evaporated. The aforementioned devices are connected in series in a heat medium circulation path and the heat medium is circulated in those devices. A heat medium that can be compressed at a compression ratio, at which a discharge temperature from the compressor becomes 150 to 200°C, is used as the heat medium. An intake temperature control unit which can control the temperature of the heat medium taken into the compressor is provided in the heat medium circulation path on the intake side of the compressor.

## Description

### TECHNICAL FIELD

The present invention relates to a heat pump apparatus and an operation method for the heat pump apparatus, and more particularly to a heat pump apparatus and an operation method for this heat pump apparatus that can increase thermal efficiency even at a high discharge temperature of a compressor, which is at equal to or higher than 150°C, and that can be operated stably.

### BACKGROUND ART

A oil-flooded screw compressor and a heat pump using the oil-flooded screw compressor are known. The oil-flooded screw compressor is provided with an oil circulation system in which oil is supplied to lubrication locations such as a bearing lubrication unit and a rotor chamber in the screw compressor, the supplied oil is discharged together with compressed gas from the discharge port of the screw compressor, the discharged mixture of compressed gas and oil is subjected to gas-oil separation in an oil separator, the recovered oil is cooled in an oil cooler, and the cooled oil is again supplied to the lubrication locations, thereby ensuring circulation and reuse of the oil.

There is a demand for improved performance of the oil-flooded screw compressor and the heat pump using the oil-flooded screw compressor. One of techniques relating to the oil-flooded screw compressor and the heat pumps using the oil-flooded screw compressor that have improved performance is disclosed in Patent Document 1. This technique uses no oil cooler in the oil system supplying the oil from the oil separator to the lubrication locations. Where it is necessary to cool the oil, part of the oil is mixed with a refrigerant system, cooled by the refrigerant, and supplied to the screw compressor therewith. Since no oil cooler is provided, the technique disclosed in Patent Document 1 is free from waste of heat in the oil cooler. The resultant advantage is that thermal efficiency of the entire heat pump is high.

Patent Document 1: Japanese Patent Application Publication No. H9-243184

### DISCLOSURE OF THE INVENTION

In the field of high-temperature heat pumps, a demand has recently been created for a heat pump with a waste heat utilization above 120°C in which the temperature of heat medium discharged from a screw compressor is above 120°C. Further, in the so-called VRC (vapor recompression) in which gas discharged from a distillation tower top is recompressed by a screw compressor and the compression heat created by the recompression is used, instead of the conventional steam, for boil-up in a reboiler, a heat pump for more than 150°C is required in which the temperature of heat medium discharged from a screw compressor is equal to or higher than 150°C.

However, the technique disclosed in Patent Document 1 is not assumed to use a heat pump with a screw compressor discharge temperature above the aforementioned temperature of 120°C and further above 150°C. Therefore, in applications to systems with a screw compressor discharge temperature above the aforementioned temperature of 120°C and further above 150°C, some problems remain unsolved, those problems being associated with modification of heat medium, heat resistance of the screw compressor, and oil circulation inside the screw compressor.

The present invention has been created to resolve the problems inherent to the conventional technique and it is an object thereof to provide a heat pump in which thermal efficiency is increased by using a configuration including no oil cooler and which can be used even at a high temperature of heat medium discharged from a screw compressor that is equal to or higher than 150°C.

In order to solve the above-described problems, the present invention provides a heat pump apparatus in which a hydraulic compressor that compresses a heat medium, an oil separation and recovery device that separates oil from the heat medium discharged from the compressor and returns the separated oil to the compressor, a condenser that liquefies the heat medium compressed in the compressor for heat dissipation, a decompression device that decompresses the heat medium liquefied in the condenser, and an evaporator that causes the heat medium decompressed in the decompression device to absorb heat and be evaporated are connected in series in a heat medium circulation path and the heat medium is circulated in those devices, this heat pump apparatus being characterized in that a heat medium that can be compressed at a compression ratio, at which a discharge temperature from the compressor becomes 150 to 200°C, is used as the heat medium, and an intake temperature control unit which can control the temperature of the heat medium taken into the compressor is provided in the heat medium circulation path on the intake side of the compressor.

Where the discharge temperature of the heat medium from the compressor is made 150 to 200°C, thermal balance including also the oil supplied to the hydraulic compressor is assumed. As a result, it is unnecessary to provide an oil cooler that cools the oil separated by the oil separation and recovery device and returned to the compressor. Therefore, the entire apparatus relating to the compressor is reduced in size and the COP (Coefficient of Performance) is increased because the heat is not dissipated by the oil cooler.
Parts located inside the compressor and exposed to a high temperature equal to or higher than 150°C should be produced using materials having heat resistance sufficient to withstand a high temperature equal to or higher than 150°C. Further, since the oil is also exposed at all times to a high temperature equal to or higher than 150°C during the operation of the compressor, an oil should be used that is not decomposed at a high temperature equal to or higher than 150°C.

By providing the intake temperature control unit, it is possible to control as appropriate the temperature of the mixture of heat medium and oil that is located inside the compressor and discharged from the compressor. As a result, the interior of the compressor is prevented from being unnecessarily heated to a high temperature, the constituent parts of the compressor and oil can be prevented from being deteriorated by a high temperature, and safe operation can be performed.

The heat medium may be a hydrocarbon refrigerant, preferably a C4-C7 hydrocarbon. For example, n-hexane, n-pentane, or isopentane may be used.

Further, the heat pump apparatus may be provided with a temperature sensor which detects the discharge temperature of the compressor, and a temperature control unit which sets a target temperature of the temperature sensor, issues a command to the intake temperature control unit, and controls an intake temperature of the heat medium taken to the compressor so that a detected value of the temperature sensor is the target temperature.

As a result, by controlling the intake temperature so that the discharge temperature of the compressor becomes the target temperature, it is possible to prevent more reliably the discharge temperature of the compressor from being unnecessarily high and the constituent parts of the compressor and oil from being deteriorated by such high temperature.
The discharge temperature of the compressor is a temperature of the mixture of the heat medium and oil discharged from the compressor, but this temperature is equal to the temperature of an oil retention section in the lower portion of the oil separation and recovery device. Therefore, it can be assumed that the temperature sensor detects the temperature of the oil retention section of the oil separation and recovery device.

The method in accordance with the present invention that resolves the aforementioned problems is an operation method for a heat pump apparatus in which a hydraulic compressor that compresses a heat medium, an oil separation and recovery device that separates oil from the heat medium discharged from the compressor and returns the separated oil to the compressor, a condenser that liquefies the heat medium compressed in the compressor for heat dissipation, a decompression device that decompresses the heat medium liquefied in the condenser, and an evaporator that causes the heat medium decompressed in the decompression device to absorb heat and be evaporated are connected in series in a heat medium circulation path and the heat medium is circulated in those devices, this method being characterized in that a heat medium that can be compressed at a compression ratio, at which a discharge temperature from the compressor becomes 150 to 200°C, is used as the heat medium, and a heat-keeping operation is performed by controlling the intake temperature of the heat medium taken into the compressor so that the discharge temperature of the compressor reaches a target temperature.

The heat-keeping operation is performed after a warm-up operation has been performed in which the heat medium is heated to a temperature equal to or higher than a boiling point at an intake pressure of the compressor.
For example, a hydrocarbon such as n-hexane, n-pentane, or isopentane can be used as the heat medium. Those media have a low boiling point at a normal temperature and are highly probable to be in a liquid state when the apparatus operation is started. Accordingly, by performing the warm-up operation, it is possible to prevent the liquid heat medium from being introduced into the compressor.

As described hereinabove, in accordance with the present invention, it is possible to provide a heat pump in which thermal efficiency is increased by using a configuration including no oil cooler and which can be used even at a high temperature of heat medium discharged from a screw compressor that is equal to or higher than 150°C.

### BRIEF DESCRIPTION OF THE DRAWINGS

FIG. 1 is a schematic diagram illustrating the heat pump according to Embodiment 1 and a peripheral equipment thereof.
FIG. 2 is a configuration diagram relating to temperature control of the gas taken into the screw compressor.
FIG. 3 is a cross sectional view of the screw compressor in Embodiment 1.

### BEST MODE FOR CARRYING OUT THE INVENTION

The present invention will be explained below by using an embodiment illustrated by the appended drawings. The dimensions, materials, shapes, and mutual arrangement of constituent parts described in the embodiment are not intended to restrict the scope of the present invention, unless specifically indicated otherwise, and merely represent a simple illustrating example.

### Embodiment 1

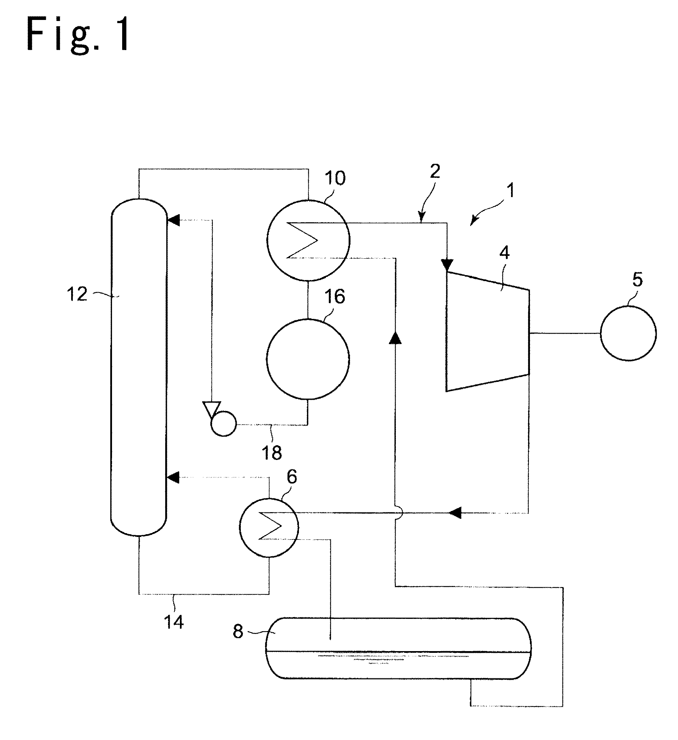

FIG. 1 is a schematic diagram illustrating the heat pump according to the embodiment and a peripheral equipment thereof. The configuration of the apparatus will be explained below with reference to FIG. 1. In FIG. 1, the reference numeral 1 stands for a heat pump. The heat pump 1 is configured by arranging a screw compressor 4, a condenser 6, a tank 8, and an evaporator 10 in a circulation circuit 2. In the heat pump 1, the heat medium circulates in the circulation circuit 2 in the following order: screw compressor 4, condenser 6, tank 8, evaporator 10, and screw compressor 4. A heat medium that can be compressed at a compression ratio such that the intake temperature to the screw compressor 4 is 60 to 100°C and the discharge temperature from the screw compressor 4 is 150 to 160°C is used as the aforementioned heat medium. More specifically, C4-C7 hydrocarbons, in particular, n-hexane, n-pentane, and isopentane can be used. Further, in FIG. 1, the reference numeral 12 stands for a distillation tower. In the present embodiment, the distillation tower 12 distills a distillation object which is an azeotropic mixture.

The operation of the apparatus is explained below with reference to FIG. 1.
First, the operation of the heat pump 1 is explained.
The heat medium from which heat has been taken by the below-described azeotropic vapor mixture becomes a gas with a temperature of 60 to 100°C that is sucked in by the screw compressor 4. The heat medium sucked into the screw compressor 4 is compressed to a discharge temperature of 150 to 160°C and transferred to the condenser 6.

The below-described distillation object in a liquid state is supplied from the distillation tower 12 into the condenser 6.
In the condenser 6, heat exchange takes place between the heat medium and the distillation object in a liquid state. The heat medium is cooled and liquefied by the heat exchange and supplied to the tank 8.

The liquid heat medium supplied to the tank 8 is depressurized in the tank 8 and supplied to the evaporator 10.
In the evaporator 10 the heat medium exchanges heat with the below-described azeotropic vapor mixture from the top of the distillation tower 12. The heat medium is heated and gasified by the heat exchange and returned as a gas with a temperature of 60 to 100°C to the screw compressor 4.

Meanwhile, in the distillation tower 12, part of the distillation object in a liquid state that is located inside the distillation tower 12 circulates in the heating circuit 14. The part of the distillation object in a liquid state circulating in the heating circuit 14 is heated by exchanging heat with the heat medium in the condenser 6 disposed in the heating circuit 14, and heat necessary for the distillation performed in the distillation tower 12 is supplied. Thus, the condenser 6 acts as a reboiler.

Since heat is supplied in the condenser 6 acting as a reboiler by the heat medium to the liquid distillation object circulating in the heating circuit 14, part of the distillation object, which is an azeotropic mixture, becomes an azeotropic vapor mixture. The azeotropic vapor mixture is supplied from the top of the distillation column 12 to the evaporator 10. The azeotropic vapor mixture supplied to the evaporator 10 exchanges heat in the evaporator 10 with the liquid heat medium supplied from the tank 8. Because of the heat exchange, the heat medium is heated and gasified, as described hereinabove, and the azeotropic vapor mixture is cooled, liquefied and supplied to a separation layer 16. The azeotropic mixture supplied to the separation layer 16 is separated into two phases (liquid - liquid) in the separation layer 16. The phase having an entrainer as the main component, from among the liquid phases separated in the separation layer 16, is supplied to a distillation tower (not shown in the figure) separate from the distillation tower 12 to remove accumulated impurities, the concentration of the accumulated impurities is decreased as necessary, and the mixture is returned to the distillation tower 12. Part of the phase including as the main components the impurities for which the concentration is not wished to be reduced by azeotropic distillation, from among the liquid phases separated in the separation layer 16, is returned through a line 18 into the distillation tower 12 to attain the desired reflux ratio.

In the above-described configuration and operation, a heat medium that can be compressed at a compression ratio such that the intake temperature to the screw compressor 4 is 60 to 100°C and the discharge temperature from the screw compressor 4 is 150 to 160°C, more specifically, C4-C7 hydrocarbons, in particular, n-hexane, n-pentane, and isopentane is used, as mentioned hereinabove, as the aforementioned heat medium. C4-C7 hydrocarbons such as n-hexane, n-pentane, and isopentane all have a low boiling point and easily can be in a liquid state at a normal temperature. Therefore, they should be heated before the apparatus shown in FIG. 1 is started.
Further, the intake gas temperature to the screw compressor 2 should be controlled to prevent the temperature of the gas sucked into the screw compressor 2 from decreasing and the gas from liquefying during the operation.
In addition, it is necessary to ensure safe operation such that the usage limit of the constituent parts of the screw compressor and the lubricating oil is not exceeded at a high temperature of 150 to 160°C. Therefore, the abrupt increase in the discharge gas temperature of the screw compressor 4 should be prevented. For this purpose, the intake gas temperature of the screw compressor 4 should be controlled.

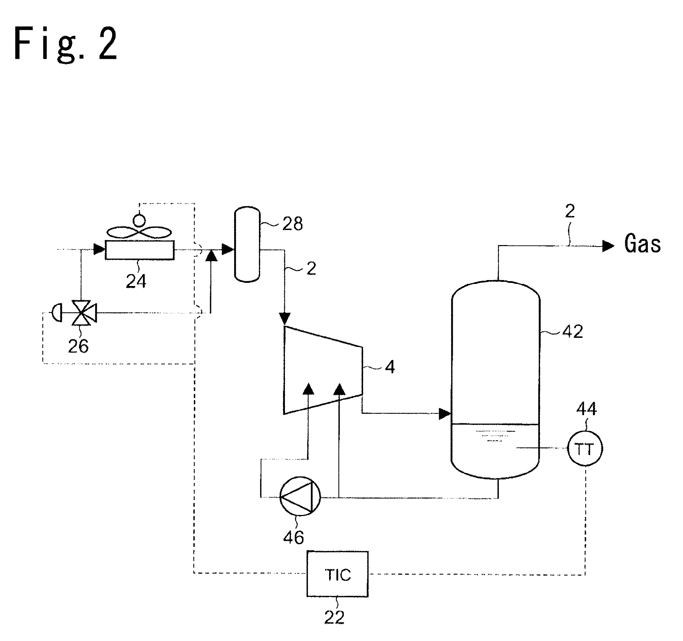

FIG. 2 is a configuration diagram relating to intake gas temperature control of the screw compressor. The devices and equipment relating to FIG. 2, with the exception of the screw compressor 4, are not shown in FIG. 1.
Initially, the supply of oil to the screw compressor will be explained with reference to FIG. 2.
In a screw compressor, gas compression is performed in three steps, namely, intake, compression, and discharge, by meshing together the teeth of a male rotor and a female rotor. By spraying oil on the meshing portions of the rotors, it is possible to drive the female rotor with the male rotor. In addition, gas sealing ability in the gap between the rotors and other gaps is increased, the efficiency can be increased by compressed gas cooling, large-volume gas processing can be performed at a high-speed revolution due to a high volume efficiency and adiabatic efficiency, the friction portions are reduced, a one-stage pressure ratio is increased, and the effect produced by liquid return is reduced. This is why the oil is supplied to the screw compressor.

The oil stored in the oil separator 42 is pumped by an oil pump 46 into the screw compressor 4 and supplied to the lubrication locations such as rotor meshing portions inside the screw compressor 4. The oil supplied to the screw compressor 4 is mixed with the heat medium gas inside the screw compressor 4 and mixed with the gas discharged from the screw compressor 4. The mixture of oil and compressed gas discharged from the screw compressor 4 is supplied to the oil separator 42. The mixture of oil and compressed gas is subjected to gas-liquid separation in the oil separator 42, the oil is again pumped into the screw compressor 4 by the pump 44, and the heat medium gas is supplied to the condenser 6 shown in FIG. 1.
The oil used herein is exposed at all times to a high temperature equal to or higher than 150°C during the operation of the screw compressor 4. Therefore, an oil that is not decomposed or deteriorated at a high temperature equal to or higher than 150°C should be used.

The temperature control of the gas taken into the screw compressor will be explained below with reference to FIG. 2.
The temperature of the liquid phase portion of the oil separator 42, that is, the temperature of oil, is detected by a temperature sensor 44 that can detect the temperature of the liquid phase portion of the oil separator 42. The temperature detected by the temperature sensor 44 is taken into a temperature regulator 22. The temperature detected by the temperature sensor 44 can be considered to be equal to the temperature of gas discharged from the compressor 4.

The temperature of the liquid phase portion of the oil separator 44, that is, the target value (for example, 160°C) of the temperature of gas discharged from the compressor 4, is set in advance in the temperature regulator 22. The temperature regulator 22 compares the temperature detected by the temperature sensor 44 with the target value, calculates the adequate intake temperature, and regulates a heat exchanger 24 provided at the intake side of the compressor 4 in the heat medium circulation circuit 2 and a bypass valve 26 provided in the bypass circuit of the heat exchanger 24. The configuration of the heat exchanger 24 is not particularly limited, provided that the temperature of heat medium can be regulated. For example, an air-cooled heat exchanger with fan control and a water-cooled heat exchanger with cooling water amount control can be used.

In the configuration relating to the temperature control of the gas taken into the screw compressor shown in FIG. 2, when the temperature detected by the temperature sensor 44 is higher than the target value (for example, 160°C) that has been set in the temperature regulator, the intake gas temperature is adjusted to a lower temperature by regulating the operation of the heat exchanger 24 and adjusting the opening degree of the bypass valve 26. Meanwhile, when the temperature detected by the temperature sensor 44 is lower than the target value (for example, 160°C) that has been set in the temperature regulator 22, the intake gas temperature is adjusted to a higher temperature by regulating the operation of the heat exchanger 24 and adjusting the opening degree of the bypass valve 26. As a result, stable operation can be performed, without exceeding the usability limit of the constituent parts of the screw compressor and the lubricating oil at a high temperature.

As mentioned hereinabove, a C4-C7 hydrocarbon, for example, n-hexane, n-pentane, and isopentane, is used as the heat medium. However, since all those compounds have a low boiling point and can be easily liquefied, it is possible that the intake gas temperature will abruptly decrease and the gas will be condensed. Accordingly, it is desirable that a knockout drum (KO drum) 28 be disposed downstream of the heat exchanger 24 and upstream of the screw compressor 4 so that the condensed gas will be prevented from entering the screw compressor 4 even in this case.

Further, the configuration shown in FIG. 2 can be also used during a warm-up operation performed when the apparatus is started. In this case, the oil alone is initially circulated in the order of compressor 4 → oil separator 42 → oil pump 46. Then, the heat medium heated, for example, by a heater (not shown in the figure) provided in the tank 8 is sucked into the screw compressor 4, while the temperature measured by the temperature sensor 44 is being monitored and the heat exchanger 24 and the bypass valve are being adjusted by the temperature regulator 22.

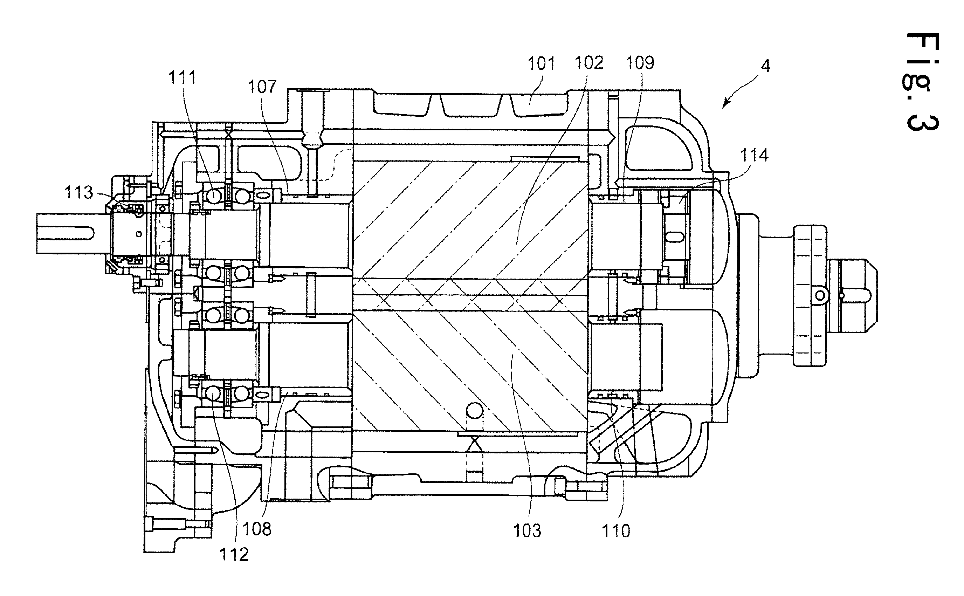

FIG. 3 is a cross-sectional view illustrating the screw compressor 4 according to the embodiment. In FIG. 3, the reference numeral 101 stands for a casing. The male rotor 2 and the female rotor 3, which are in the form of helical gears with different numbers of teeth, are accommodated inside the casing 1 so that the rotors mesh together and rotate in opposite directions.

The reference numerals 107 and 109 stand for bearings on the male rotor side. The shaft of the male rotor 102 is rotatably supported by the bearings 107 and 109 at the casing 101. The reference numerals 108 and 110 stand for bearings on the female rotor side. The shaft of the female rotor 103 is rotatably supported by the bearings 108 and 110 at the casing 101.
The reference numeral 111 stands for a thrust bearing on the male rotor side. The thrust load of the male rotor 102 is taken up by the casing 101 via the shaft of the male rotor 102 and the thrust bearing 111. Further, the reference numeral 112 stands for a thrust bearing on the female rotor side. The thrust load of the female rotor 103 is taken up by the casing 101 via the shaft of the female rotor 103 and the thrust bearing 112.
The reference numeral 113 stands for a mechanical shaft seal that seals the shaft of the male rotor 102.

The reference numeral 114 is a balance piston that is fixedly attached to the end portion of the shaft of the male rotor 102 on the side opposite that of the drive side where the thrust load becomes large. The balance piston is fitted into the cylinder formed inside the casing 101, so that the piston can reciprocatingly slide therein.

The gaseous heat medium that is introduced into the screw compressor 4 during the operation of the screw compressor 4 is compressed and discharged by volume variations in the gap between the male rotor 102 and the female rotor 103 that rotate in mutually opposite directions.
The thrust load generated by volume variations in the gap generated when the male rotor 102 and the female rotor 103 rotate is taken up by the casing 101 via the shaft of the male rotor 102 and the thrust bearing 111 on the male rotor 102 side and by the casing 101 via the shaft of the female rotor 103 and the thrust bearing 112 on the female rotor 103 side.

In the screw compressor 4 shown in FIG. 3, the male rotor 102, female rotor 103, bearings 107, 108, 109, 110, thrust bearings 111, 112, mechanical shaft seal 113, and balance piston 114 are exposed to a high temperature of about 150 to 160°C, which is the compressor discharge temperature of the heat medium, due to the compression of heat medium and introduction of oil. Therefore, the aforementioned constituent components of the screw compressor should be produced using materials having heat resistance sufficient to withstand a high temperature of about 150 to 160°C.

Further, the clearance between the casing 101 and the male rotor 102 and the clearance between the casing 101 and the female rotor 103 can be adjusted to prevent the male rotor 102 and the female rotor 103 from exposure to an unnecessarily high temperature.
For example, where rotor clearance ratio represented by the clearance between the rotor and the casing and the outer diameter of the rotor is taken as 0.0020 (= 20/10,000), the increase in the temperature of the rotors (male rotor 102, female rotor 103) can be inhibited.

### INDUSTRIAL APPLICABILITY

In the heat pump and the operation method therefor in accordance with the present invention, no oil cooler is provided and therefore thermal efficiency can be increased. Furthermore, the heat pump can be used even at a high temperature of heat medium discharged from a screw compressor that is equal to or higher than 150°C.

## Claims

1. A heat pump apparatus in which a hydraulic compressor that compresses a heat medium, an oil separation and recovery device that separates oil from the heat medium discharged from the compressor and returns the separated oil to the compressor, a condenser that liquefies the heat medium compressed in the compressor for heat dissipation, a decompression device that decompresses the heat medium liquefied in the condenser, and an evaporator that causes the heat medium decompressed in the decompression device to absorb heat and be evaporated are connected in series in a heat medium circulation path and the heat medium is circulated in those devices,
the heat pump apparatus being **characterized in that**
a heat medium that can be compressed at a compression ratio, at which such that a discharge temperature from the compressor becomes 150 to 200°C, is used as the heat medium, and
an intake temperature control unit which can control the temperature of the heat medium taken into the compressor is provided in the heat medium circulation path on the intake side of the compressor.

2. The heat pump apparatus according to claim 1, wherein the heat medium is a hydrocarbon refrigerant.

3. The heat pump apparatus according to claim 2, wherein the heat medium is a C4-C7 hydrocarbon refrigerant.

4. The heat pump apparatus according to claim 1, comprising:
a temperature sensor which detects the discharge temperature of the compressor, and
a temperature control unit which sets a target temperature of the temperature sensor, issues a command to the intake temperature control unit, and controls an intake temperature of the heat medium taken to the compressor so that a detected value of the temperature sensor is the target temperature.

5. An operation method for a heat pump apparatus in which a hydraulic compressor that compresses a heat medium, an oil separation and recovery device that separates oil from the heat medium discharged from the compressor and returns the separated oil to the compressor, a condenser that liquefies the heat medium compressed in the compressor for heat dissipation, a decompression device that decompresses the heat medium liquefied in the condenser, and an evaporator that causes the heat medium decompressed in the decompression device to absorb heat and be evaporated are connected in series in a heat medium circulation path and the heat medium is circulated in those devices,
the operation method being **characterized in that**
a heat medium that can be compressed at a compression ratio, at which a discharge temperature from the compressor becomes 150 to 200°C, is used as the heat medium, and
a heat-keeping operation is performed by controlling the intake temperature of the heat medium taken into the compressor so that the discharge temperature of the compressor reaches a target temperature.

6. The operation method for a heat pump apparatus according to claim 5, wherein the heat-keeping operation is performed after a warm-up operation has been performed in which the heat medium is heated to a temperature equal to or higher than a boiling point at an intake pressure of the compressor.

## Amended claims

### Amended claims under Art. 19.1 PCT

**1.** (Amended) A heat pump apparatus in which a hydraulic compressor that compresses gas to be compressed that is at a temperature equal to or higher than a normal temperature, an oil separation and recovery device that separates oil from the gas discharged from the compressor and returns the separated oil to the compressor, a condenser that liquefies the gas compressed in the compressor for heat dissipation, a decompression device that decompresses the gas liquefied in the condenser, and an evaporator that causes the liquefied gas decompressed in the decompression device to absorb heat and be evaporated are connected in series in a gas circulation path and the gas is circulated in those devices,
the heat pump apparatus being **characterized in that**
a hydrocarbon converted into a gaseous state by heating is used as the gas to be compressed that is taken into the compressor and the compressor is set to be capable of compressing the gas at a compression ratio at which a discharge temperature becomes 150 to 200°C, and
a heating unit which heats the gas provided at the intake side of the compressor and an intake temperature control unit which performs heating control of the heating unit to be able to control the temperature of the hydrocarbon taken into the compressor are provided, and
the heating control of the heating unit is performed by the intake temperature control unit so that the hydrocarbon is controlled by heating to a gaseous state.

**2.** (Deleted)

**3.** (Amended) The heat pump apparatus according to claim 1, wherein the gas to be compressed is a C4-C7 hydrocarbon refrigerant, and the hydrocarbon is heated by the intake temperature control unit to a temperature of 60 to 110°C and used as the gas to be taken into the compressor.

**4.** (Amended) The heat pump apparatus according to claim 1, comprising:
a temperature sensor which detects the discharge temperature of the compressor, wherein
a command is issued to the intake temperature control unit and the intake temperature of the hydrocarbon taken into the compressor is controlled so that a target temperature of the temperature sensor is set to 150 to 200°C and a detected value of the temperature sensor is the target temperature.

**5.** (Amended) An operation method for a heat pump apparatus in which a hydraulic compressor that compresses gas to be compressed that is at a temperature equal to or higher than a normal temperature, an oil separation and recovery device that separates oil from the gas discharged from the compressor and returns the separated oil to the compressor, a condenser that liquefies the gas compressed in the compressor for heat dissipation, a decompression device that decompresses the gas liquefied in the condenser, and an evaporator that causes the liquefied gas decompressed in the decompression device to absorb heat and be evaporated are connected in series in a gas circulation path and the gas is circulated in those devices, wherein
a hydrocarbon converted into a gaseous state by heating is used as the gas to be compressed that is taken into the compressor and the compressor is set to be capable of compressing the gas at a compression ratio at which a discharge temperature becomes 150 to 200°C, and
the temperature of the hydrocarbon taken into the compressor is controlled by heating to maintain the hydrocarbon in a gaseous state by means of a heating unit which heats the gas provided at the intake side of the compressor.

**6.** (Amended) The operation method for a heat pump apparatus according to claim 5, wherein the hydrocarbon is heated by the heating unit to a temperature equal to or higher than a boiling point at an intake pressure of the compressor before the compressor is operated.
